# EUROPEAN PATENT APPLICATION

(11) **EP 3 150 551 A1**
(43) Date of publication of application: **05.04.2017**
(21) Application number: 15188248.7
(22) Date of filing: 02.10.2015
(51) Int. Cl.: C01B 32/182

(54) **METHOD OF PRODUCING GRAPHENE STRUCTURES**

(71) Applicant: O'Flynn, Donal Paul, Dublin (IE); Shelley, William Franklin, Chandler, AZ 85249 (US)
(72) Inventor: O'Flynn, Donal Paul, Dublin (IE); Shelley, William Franklin, Chandler, AZ 85249 (US)
(74) Representative: Kelly, Donal Morgan

(57) **Abstract**

The present invention relates to a method for producing graphene structures, the method comprising the steps of providing a substrate; forming graphene on or at the substrate; and removing the substrate to provide a graphene structure. Also disclosed are methods for producing graphene tubes, graphene ribbons, and graphene films.

## Description

### Field of the Invention

This invention relates to a method for producing graphene structures by providing a substrate; forming a graphene on or at the substrate; and removing the substrate to provide a graphene structure. Also disclosed are graphene structures produced by that method; a further method for producing graphene fibres, and the graphene fibres produced by that further method.

### Background to the Invention

The present invention relates to a method for producing structures formed from graphene. In particular, the present invention provides a method for producing high modulus, high tensile strength carbon fibres. High performance carbon fibres are primarily made from a polyacrylonitrile (PAN) precursor fibre that is oxidized and then carbonized. 50% of the cost of the end-product carbon fibre is attributed to the PAN precursor. 40% of the total cost of production of PAN-based carbon fibres comes from the energy intensive, high temperature oxidation and carbonization processes. The final 10% of the cost is attributed to post treatment of the fibres. Research into carbon fibres produced from other precursors such as pitch, polyolefin, and lignin have failed to produce carbon fibres with the requisite tensile strength and elastic modulus.

The present invention takes advantage of the unique properties of graphene that can be produced from various cheap hydrocarbon precursors and on various substrates.

### Summary of the Invention

According to a first aspect of the present invention, there is provided a method for producing graphene structures, the method comprising the steps of:
(a) providing a substrate;
(b) forming graphene on or at the substrate; and
(c) removing the substrate to provide a graphene structure.

According to a second aspect of the present invention, there is provided a method for producing graphene tubes, the method comprising the steps of:
(d) providing a generally cylindrical substrate;
(e) forming graphene on or at the substrate; and
(f) removing the substrate to provide a graphene tube.

According to a third aspect of the present invention, there is provided a method for producing graphene fibres, the method comprising the steps of:
(a) providing more than one graphene tube;
(b) assembling the more than one graphene tube into a contiguous bundle; and
(c) deforming the contiguous bundle to provide a graphene fibre.

According to a fourth aspect of the present invention, there is provided a method for producing graphene films, the method comprising the steps of:
(a) providing a generally planar substrate;
(b) forming graphene on or at the substrate; and
(c) removing the substrate to provide a graphene film.

Optionally, the providing more than one graphene tube step comprises providing more than one graphene tube produced by a method according to a first aspect of the present invention.

The substrate can be any substrate on or at which graphene can be formed. Preferably, the substrate can be any substrate on or at which graphene can be formed and which substrate can be removed to provide a graphene structure.

Optionally, the substrate is a ribbon. Further optionally, the substrate is a planar ribbon. However, it is appreciated that the ribbon can be of any cross-sectional dimension required to produce a graphene tube.

Optionally or additionally, the substrate comprises at least one ribbon. Further optionally or additionally, the substrate comprises a plurality of ribbons. Optionally or additionally, the substrate comprises at least one planar ribbon. Further optionally or additionally, the substrate comprises a plurality of planar ribbons. Optionally or additionally, the substrate comprises at least one continuous ribbon. Further optionally or additionally, the substrate comprises a plurality of continuous ribbons. Optionally or additionally, the substrate comprises at least one continuous planar ribbon. Further optionally or additionally, the substrate comprises a plurality of continuous planar ribbons.

Optionally, the substrate is a plate. Further optionally, the substrate is a planar plate. However, it is appreciated that the plate can be of any cross-sectional dimension required to produce a graphene film.

Optionally, the substrate is a wire. Further optionally, the substrate is a cylindrical wire. However, it is appreciated that the wire can be of any cross-sectional shape required to produce the graphene tube.

Optionally or additionally, the substrate is a continuous wire. Further optionally or additionally, the substrate is a continuous cylindrical wire.

Optionally or additionally, the substrate comprises at least one wire. Further optionally or additionally, the substrate comprises a plurality of wires. Optionally or additionally, the substrate comprises at least one cylindrical wire. Further optionally or additionally, the substrate comprises a plurality of cylindrical wires. Optionally or additionally, the substrate comprises at least one continuous wire. Further optionally or additionally, the substrate comprises a plurality of continuous wires. Optionally or additionally, the substrate comprises at least one continuous cylindrical wire. Further optionally or additionally, the substrate comprises a plurality of continuous cylindrical wires.

Optionally, the substrate is formed from a material selected from copper, nickel, chromium, stainless steel, silicon dioxide, and aluminium (III) oxide.

Optionally, the substrate is formed from a metal or metal alloy. Further optionally, the substrate is formed from a plastic metal or metal alloy. Further optionally, the substrate is formed from a ductile metal or metal alloy. Alternatively the substrate is formed from a malleable metal or metal alloy.

Optionally, the substrate is formed from a metal or metal alloy selected from copper, nickel, chromium, and stainless steel.

Optionally, the substrate is formed from copper.

Optionally or additionally, the substrate comprises at least one copper wire. Further optionally or additionally, the substrate comprises a plurality of copper wires. Optionally or additionally, the substrate comprises at least one cylindrical copper wire. Further optionally or additionally, the substrate comprises a plurality of cylindrical copper wires. Optionally or additionally, the substrate comprises at least one continuous copper wire. Further optionally or additionally, the substrate comprises a plurality of continuous copper wires. Optionally or additionally, the substrate comprises at least one continuous cylindrical copper wire. Further optionally or additionally, the substrate comprises a plurality of continuous cylindrical copper wires.

Optionally, the substrate has a cross sectional diameter of about 10 to about 10,000 micrometres (µm). Further optionally, the substrate has a cross sectional diameter of about 10 to about 100 micrometres (µm).

Optionally or additionally, the substrate comprises at least one copper wire having a cross sectional diameter of about 10 to about 10000 micrometres (µm). Further optionally or additionally, the substrate comprises a plurality of copper wires, each having a cross sectional diameter of about 10 to about 10000 micrometres (µm). Optionally or additionally, the substrate comprises at least one cylindrical copper wire having a cross sectional diameter of about 10 to about 10000 micrometres (µm). Further optionally or additionally, the substrate comprises a plurality of cylindrical copper wires, each having a cross sectional diameter of about 10 to about 10000 micrometres (µm). Optionally or additionally, the substrate comprises at least one continuous copper wire having a cross sectional diameter of about 10 to about 10000 micrometres (µm). Further optionally or additionally, the substrate comprises a plurality of continuous copper wires, each having a cross sectional diameter of about 10 to about 10000 micrometres (µm). Optionally or additionally, the substrate comprises at least one continuous cylindrical copper wire having a cross sectional diameter of about 10 to about 10000 micrometres (µm). Further optionally or additionally, the substrate comprises a plurality of continuous cylindrical copper wires, each having a cross sectional diameter of about 10 to about 10000 micrometres (µm).

Alternatively, the substrate comprises at least one copper ribbon. Further optionally or additionally, the substrate comprises a plurality of copper ribbons. Optionally or additionally, the substrate comprises at least one planar copper ribbon. Further optionally or additionally, the substrate comprises a plurality of planar copper ribbons. Optionally or additionally, the substrate comprises at least one continuous copper ribbon. Further optionally or additionally, the substrate comprises a plurality of continuous copper ribbons. Optionally or additionally, the substrate comprises at least one continuous planar copper ribbon. Further optionally or additionally, the substrate comprises a plurality of continuous planar copper ribbons.

Optionally, the substrate has a thickness of about 10 to about 1000 micrometres (µm).

Optionally or additionally, the substrate comprises at least one copper ribbon having a thickness of about 10 to about 1000 micrometres (µm). Further optionally or additionally, the substrate comprises a plurality of copper ribbons, each having a thickness of about 10 to about 1000 micrometres (µm). Optionally or additionally, the substrate comprises at least one planar copper ribbon having a thickness of about 10 to about 1000 micrometres (µm). Further optionally or additionally, the substrate comprises a plurality of planar copper ribbons, each having a thickness of about 10 to about 1000 micrometres (µm). Optionally or additionally, the substrate comprises at least one continuous copper ribbon having a thickness of about 10 to about 1000 micrometres (µm). Further optionally or additionally, the substrate comprises a plurality of continuous copper ribbons, each having a thickness of about 10 to about 1000 micrometres (µm). Optionally or additionally, the substrate comprises at least one continuous planar copper ribbon having a thickness of about 10 to about 1000 micrometres (µm). Further optionally or additionally, the substrate comprises a plurality of continuous planar copper ribbons, each having a thickness of about 10 to about 1000 micrometres (µm).

Alternatively, the substrate comprises at least one copper film having a thickness of about 10 to about 1000 micrometres (µm). Further optionally or additionally, the substrate comprises a plurality of copper films, each having a thickness of about 10 to about 1000 micrometres (µm). Optionally or additionally, the substrate comprises at least one planar copper film having a thickness of about 10 to about 1000 micrometres (µm). Further optionally or additionally, the substrate comprises a plurality of planar copper films, each having a thickness of about 10 to about 1000 micrometres (µm). Optionally or additionally, the substrate comprises at least one continuous copper film having a thickness of about 10 to about 1000 micrometres (µm). Further optionally or additionally, the substrate comprises a plurality of continuous copper films, each having a thickness of about 10 to about 1000 micrometres (µm). Optionally or additionally, the substrate comprises at least one continuous planar copper film having a thickness of about 10 to about 1000 micrometres (µm). Further optionally or additionally, the substrate comprises a plurality of continuous planar copper films, each having a thickness of about 10 to about 1000 micrometres (µm).

By "continuous" is meant a substrate having an uninterrupted length. The substrate can have an uninterrupted length of more than 1 m, optionally more than 10m, further optionally more than 100m, further optionally more than 1000m.

By "wire" is meant a substrate having substantially the same cross sectional dimensions i.e. the dimensions on or at the polar axis are substantially the same.

By "ribbon" is meant a substrate having a length of greater dimension that width, and the length and the width are each greater than the thickness (depth). The width is generally less than half the dimension of the length.

By "film" is meant a substrate having a length of greater dimension that width, and the length and the width are each greater than the thickness (depth). The width is generally greater than half the dimension of the length.

Optionally, the forming graphene step comprises providing a carbon source. Further optionally, the forming graphene step comprises providing a hydrocarbon source.

Optionally, the method comprises the steps of:
(a) providing a substrate;
(b) providing a carbon source;
(c) forming graphene on or at the substrate; and
(d) removing the substrate to provide a graphene structure.

Optionally, the providing a carbon source step comprises heating the substrate. Further optionally, the providing a carbon source step comprises heating the substrate to a temperature up to 1000°C.

Further optionally, the providing a carbon source step comprises heating the substrate by applying a heat source. Further optionally, the providing a carbon source step comprises heating the substrate by applying a heat source selected from resistive heating, combustion burners, induction heating, and plasma.

Optionally or additionally, the providing a carbon source step comprises providing a gaseous carbon source. Further optionally or additionally, the providing a carbon source step comprises providing methane or ethylene.

Optionally or additionally, the providing a carbon source step comprises providing a liquid carbon source. Further optionally, the providing a carbon source step comprises spraying a liquid carbon source.

Optionally, the carbon source is an oil product. Further optionally, the carbon source is an oil distillate. Still further optionally, the carbon source is a heavy oil distillate. Still further optionally, the carbon source is an oil residuum.

Optionally, the carbon source is a petroleum product. Further optionally, the carbon source is a petroleum distillate. Still further optionally, the carbon source is a heavy petroleum distillate. Still further optionally, the carbon source is a petroleum residuum.

Optionally, the providing a carbon source step comprises providing petroleum jelly or paraffin wax. Further optionally or additionally, the providing a carbon source step comprises spraying petroleum jelly or paraffin wax.

Optionally, the providing a carbon source step is conducted in the absence of a medium. Further optionally, the providing a carbon source step is conducted in the absence of a fluid medium. Still further optionally, the providing a carbon source step is conducted in the absence of air. Still further optionally, the providing a carbon source step is conducted in the absence of oxygen. Still further optionally, the providing a carbon source step is conducted under vacuum.

Optionally, the forming graphene step comprises forming a single layer of graphene on or at the substrate. Further optionally, the forming graphene step comprises forming more than one layer of graphene on or at the substrate. Still further optionally, the forming graphene step comprises forming a plurality of layers of graphene on or at the substrate.

Optionally, the forming graphene step further comprises the step of removing hydrogen.

Optionally, the removing the substrate step comprises dissolving the substrate.

Optionally, the removing the substrate step comprises contacting the substrate with an acid. Further optionally, the removing the substrate step comprises contacting the substrate with a mineral acid. Still further optionally, the removing the substrate step comprises contacting the substrate with a nitric acid. Still further optionally, the removing the substrate step comprises contacting the substrate with a fuming nitric acid.

Optionally, the removing the substrate step further comprises dehydrating and/or drying the graphene structure.

Optionally or additionally, the removing the substrate step further comprises degassing the graphene structure.

Optionally, the deforming the contiguous bundle step comprises stretching the contiguous bundle. Further optionally, the deforming the contiguous bundle step comprises increasing the longitudinal length of the contiguous bundle.

Optionally, the deforming the contiguous bundle step comprises twisting the contiguous bundle. Further optionally, the deforming the contiguous bundle step comprises rotating the contiguous bundle about the longitudinal length of the contiguous bundle.

Also disclosed is an apparatus for producing graphene structures, the apparatus comprising a reaction chamber for forming graphene on or at a substrate; and means for removing the substrate to provide a graphene structure.

Optionally, the reaction chamber comprises a heat source. Further optionally, the reaction chamber comprises a heat source selected from a resistive heater, a combustion burner, an induction heater, and a plasma generator.

Optionally, the reaction chamber is adapted to receive a substrate. Further optionally, the reaction chamber is adapted allow the passage of a substrate therethrough. Further optionally, the reaction chamber is adapted allow the passage of a continuous substrate therethrough.

Optionally, the reaction chamber is adapted to receive a carbon source. Further optionally, the reaction chamber is adapted to receive a hydrocarbon source. Optionally, the reaction chamber comprises a carbon source reservoir. Further optionally, the reaction chamber comprises a hydrocarbon source reservoir.

Optionally, the reaction chamber is adapted to provide a vacuum. Optionally, the reaction chamber comprises a vacuum pump.

Optionally, the means for removing the substrate comprises a bath. Optionally, the means for removing the substrate comprises an acid bath. Further optionally, the means for removing the substrate comprises a mineral acid bath. Still further optionally, the means for removing the substrate comprises a nitric acid bath. Still further optionally, the means for removing the substrate comprises a fuming nitric acid bath.

### Brief Description of the Drawings

Embodiments of the present invention will now be described with reference to the accompanying drawings and non-limiting examples, in which:

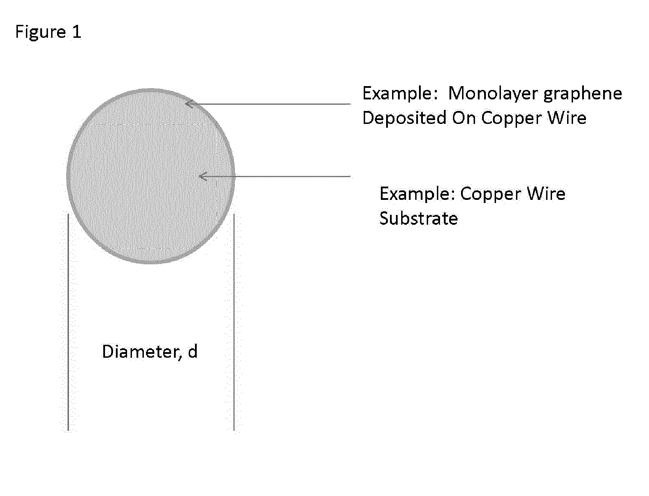

Figure 1 is a cross sectional view of a copper wire substrate having graphene formed on or at the substrate in a method according to the present invention;

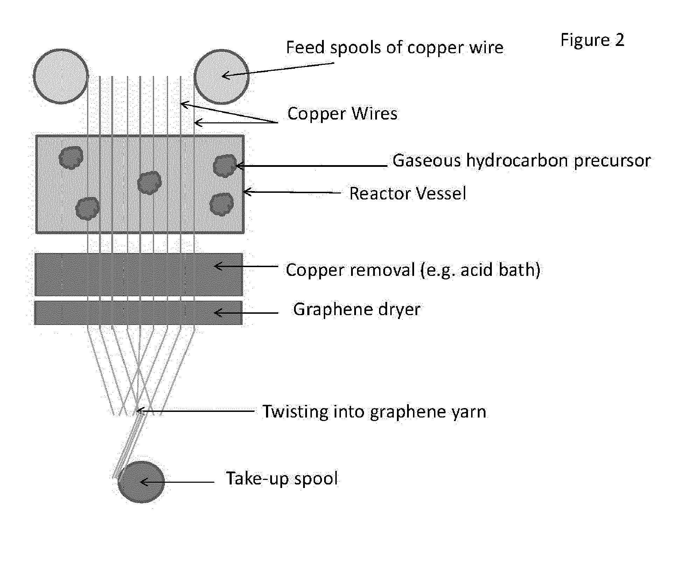

Figure 2 is a schematic diagram of an apparatus for conducting a method according to the present invention; and

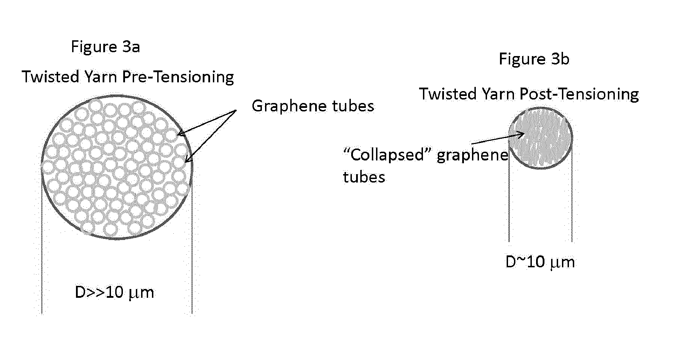

Figure 3 is a cross sectional view of graphene fibre comprising a contiguous bundle of graphene tubes in a method according to the present invention.

### Detailed Description of the Invention

The present invention provides a method for producing graphene structures. The method comprises the steps of providing a substrate; forming graphene on or at the substrate; and removing the substrate to provide a graphene structure.

The method of the present invention can be used for producing graphene tubes by providing a generally cylindrical substrate; forming graphene on or at the substrate; and removing the substrate to provide a graphene tube. Moreover, the method can be used for producing graphene fibres by providing more than one graphene tube (which can be more than one graphene tube produced by a method according to a first aspect of the present invention or any graphene tube); assembling the more than one graphene tube into a contiguous bundle; and deforming the contiguous bundle to provide a graphene fibre.

The method can be used for producing graphene films by providing a generally planar substrate; forming graphene on or at the substrate; and removing the substrate to provide a graphene film.

### Producing graphene fibres

Copper wires, each having a diameter of 10 µm to 1 cm in diameter and length of >1 kilometre were used. Other substrates may also be used instead of copper such as nickel, stainless steel, SiO2, Al2O3, etc. The copper wire is used due to its commercial availability in a range of diameters. The form factor of the substrate may be as a cylindrical wire or a flat ribbon or foil, as examples. The copper wires are fed from spools into a reaction chamber (reactor zone) that is heated. The source of heat may be any energy source that can provide reactor temperatures up to 1000°C, such as resistive heating, combustion burners, induction heating, etc. RF or DC plasma may also be used to provide a temperature within the plasma high enough to crack the precursor hydrocarbon.

A low cost hydrocarbon source is fed into the heated reactor zone. This may be a gaseous precursor such as methane or ethylene. It may also be a solid or liquid precursor such as petroleum jelly, paraffin wax, etc., that may boil and become gaseous at the reactor temperature. Liquid precursor may be introduced into the reactor chamber in a reservoir to generally fill the reactor chamber with gaseous vapors, or may be applied directly to the substrate via a dip coating or spraying method. The heat provided in the reactor zone is sufficient to cause thermal cracking of the hydrocarbon precursor. The copper substrate will act as a catalyst for the thermal dissociation of the hydrocarbon precursor and carbon will deposit on the substrate in the form of graphene.

The atmosphere within the heated reactor vessel can be controlled by differential pumping though multiple reactor zones so that the substrate can transition from atmospheric pressure to moderately high vacuums or slightly positive pressures. Oxygen must be eliminated from the reactor vessel to prevent oxidation of the hydrocarbon into CO or CO₂. The temperature the reactor chamber and the feed rate of the copper substrate (so time and temperature) will determine form of the graphene deposited on the substrate, such as monolayer graphene, or few layer graphene.

Upon thermal dissociation of the hydrocarbon, hydrogen gas is also produced according to the example equation: CH₄ + heat -> C + 2H₂

In this example, the carbon deposits on the copper substrate in the form of graphene. The liberated hydrogen gas can then be separated from the hydrocarbon gases within the reactor vessel by a gas separation membrane. The hydrogen gas may be used as a gaseous fuel for combustion or may be further combined with Nitrogen to form liquid ammonia or energy dense liquid fuels. The copper substrates now coated with graphene are further fed out of the reactor vessel at a controlled rate.

The copper substrate can then be removed by dissolution in an acid such as nitric acid. Resulting in free, continuous, hollow tubes of graphene with an inside diameter determined by the outside diameter of the copper wire.

Alternatively, the copper wire may be left and the resulting structure is a core-shell structure with a copper core covered by a graphene shell. The electrical conductivity of the graphene will result in improved conductivity of the resulting conductor wire or cable.

The free graphene tubes or ribbons can then be dried and degassed via heat and vacuum.

As the copper wires or substrates may be fed into the reactor vessel as a plurality, the resulting plurality of free graphene tubes may now be twisted into long, continuous graphene conductors, analogous to the twisted copper conductors in conventional electrical wire or cable. As the fibre is twisted, the graphene tubes will collapse, eliminating the inside diameter of each tube. The twisted fibre may be pulled (tensioned) sufficiently that a dense conductor core is achieved.

The copper dissolved in acid may be recovered and reused by precipitation the copper from solution.

The twisted graphene fibre may then be coated with conventional polymeric insulator materials such as polyvinylchloride (PVC) or teflon, as in traditional copper wire.

The resulting graphene conductor wire or cable will be strong, lightweight, and can support a higher current density than traditional copper conductor wire. This will result in lower line loss due to resistance. For long transmission lines, graphene conductor wires or cables could be joined by a coupler to extend the overall length to many kilometres.

### Producing graphene films

Using the same method previously described for depositing graphene on copper wires in a continuous process, large area (>1 m wide by >1 km long) thin films of graphene may be produced. A copper plate with any thickness between 10 µm to several mm and length of >1 kilometre can be used. Graphene has excellent electrical and thermal conductivity and is ideal as an electrode or conductor. Graphene is known to be able to carry the highest current density of any material at room temperature. Graphene also has excellent mechanical strength and is extremely light weight.

Presently, growing large area graphene is extremely difficult. Typically, large area graphene is considered to be on the order of 50 mm x 50 mm. The limitation in growing larger area sheets of graphene is due to the limitations of the size of the chemical vapour deposition systems used for the growth of graphene and the ability to control heating rate, cooling rate, and absolute temperature. In addition, present systems are typically batch process tube furnaces. In the present methods, the reactor zone use for graphene growth is up to a few meters in diameter, allowing the growth of extremely large area graphene. In addition, as described in previous embodiments, the system allows for continuous processing. The absolute temperature of the proposed system will be maintained due to the extremely large thermal mass and the fact that the system will be operated continuously, eliminating heat-up and cool-down cycles. The heating and cooling rates of the graphene growth on the copper substrate are controlled by the rate at which the substrate is moved through the reactor zone. The use of differential pumping at the inlet and the outlet of the reactor allows for continuous feed into the reactor and can be used to control heating and cooling rates.

The resulting large area graphene film may be used in applications such as optically transparent, flexible electrodes in devices such as photovoltaic solar panels and digital displays using LEDs.

Accordingly, the present invention provides the following advantages:
1. Multiple substrate types may be used.
2. Multiple hydrocarbon precursor sources may be used.
3. Various energy sources may be used to provide the cracking energy.
4. An alternative method to the oxidation and carbonization processes in traditional PAN based carbon fibre.
5. Various methods can be used to release the graphene from the substrate.
6. The graphene tubes do not have to be twisted into a fibre, but could be maintained generally parallel to each other and then tensioned.
7. Different size ranges of substrates may be used, and therefor different size ranges of graphene tube may be produced.
8. The electrical and thermal conductivity properties of the graphene can be tailored based on the choice of substrate and the times and temperatures in the reactor vessel/chamber.
9. A method for continuous processing.
10. The very high temperature oxidation and carbonization processes of the traditional PAN based carbon fibre production methods are eliminated or significantly reduced.

## Claims

1. A method for producing graphene structures, the method comprising the steps of:
(a) providing a substrate;
(b) forming graphene on or at the substrate; and
(c) removing the substrate to provide a graphene structure.

2. A method according to Claim 1, wherein the substrate is a cylindrical wire.

3. A method according to Claim 1, wherein the substrate is a ribbon.

4. A method according to Claim 1, wherein the substrate is a planar plate.

5. A method according to any preceding claim, wherein the substrate is a continuous substrate.

6. A method according to Claim 2, 3, or 5, wherein the substrate comprises a plurality of substrates or continuous substrates.

7. A method according to any preceding claim, wherein the substrate is formed from a material selected from copper, nickel, chromium, stainless steel, silicon dioxide, and aluminium (III) oxide.

8. A method according to any preceding claim, wherein the substrate is formed from copper.

9. A method according to any preceding claim, wherein the forming graphene step comprises providing a carbon source.

10. A method according to Claim 9, wherein the providing a carbon source step comprises heating the substrate to a temperature up to 1000°C.

11. A method according to Claim 9 or 10, wherein the providing a carbon source step comprises providing a petroleum distillate, a heavy petroleum distillate, or a petroleum residuum.

12. A method according to any one of Claims 9-11, wherein the providing a carbon source step is conducted in the absence of oxygen.

13. A method according to any preceding claim, wherein the removing the substrate step comprises dissolving the substrate.

14. A method according to any preceding claim, wherein the removing the substrate step comprises contacting the substrate with an acid.

15. A method for producing graphene fibres, the method comprising the steps of:
(a) providing more than one graphene tube produced by a method according to any of Claims 1-2 and 5-14;
(b) assembling the more than one graphene tube into a contiguous bundle; and
(c) deforming the contiguous bundle to provide a graphene fibre.
